# EUROPÄISCHE PATENTSCHRIFT

(11) **EP 3 797 661 B1**
(45) Veröffentlichungstag und Bekanntmachung des Hinweises auf die Patenterteilung: **15.12.2021**
(21) Anmeldenummer: 20203478.1
(22) Anmeldetag: 22.01.2020
(51) Int. Cl.: A47K 13/26, F16B 13/08

(54) **KIPPDÜBEL**
TOGGLE FASTENER
CHEVILLE À BASCULE

(30) Priorität: 24.05.2019 EP 19176401; 18.12.2019 CH 16392019
(43) Veröffentlichungstag der Anmeldung: 31.03.2021
(62) Teilanmeldung aus: 20153110.0
(73) Patentinhaber: Geberit International AG, 8645 Jona (CH)
(72) Erfinder: DIETHELM, Alois, 8857 Vorderthal (CH)
(74) Vertreter: Frischknecht, Harry Ralph

(56) Entgegenhaltungen:
- EP-A1- 3 381 342
- WO-A1-2014/109721
- CN-A- 106 725 061
- CN-U- 205 689 562

## Beschreibung

### TECHNISCHES GEBIET

Die vorliegende Erfindung betrifft einen Kippdübel nach dem Anspruch 1.

### STAND DER TECHNIK

Kippdübel mit einem Schraubenelement und einem Bügelelement sind aus dem Stand der Technik bekannt. Das Dokument WO 2014/109721 A1 offenbart einen Kippdübel.

Solche Kippdübel werden typischerweise in Öffnungen eingesetzt, wobei das Bügelelement in Bereiche zu liegen kommt, welche nicht zugänglich sind. Typischerweise ist das Bügelelement derart ausgebildet, dass bei einer Montagerichtung, in welcher das Schraubenelement in der Horizontalen liegt, aufgrund der Hebelverhältnisse automatisch kippt. Bei der Montage in anderer Richtung sind Kippdübel oft nur unter Zuhilfenahme eines zusätzlichen Werkzeuges zu montieren.

Ein weiteres Problem ergeht beim Anziehen des Schraubenelementes. Typischerweise kommt es zu einem Verdrehen des Bügelelementes wenn das Schraubenelement betätigt wird. Der Installateur muss dann entweder über ein zusätzliches Werkzeug oder durch Anpressen des Bügelelementes für eine Drehmomentaufnahme sorgen. Das heisst, dass der Kippdübel für das Anziehen der Schraube gegen die Montagefläche gezogen werden muss, was den Montagevorgang aufwändiger und komplizierter gestalten lässt. Zusammengefasst weisen die aus dem Stand der Technik bekannten Bügelelemente den Nachteil auf, dass dies aufwändig zu montieren sind.

### DARSTELLUNG DER ERFINDUNG

Ausgehend von diesem Stand der Technik liegt der Erfindung eine Aufgabe zugrunde, ein Kippdübel anzugeben, welcher die Nachteile des Standes der Technik überwindet. Insbesondere ist es eine Aufgabe der vorliegenden Erfindung, einen Kippdübel anzugeben, welcher vergleichsweise einfach zu montieren ist.

Diese Aufgabe löst der Gegenstand vom Anspruch 1. Demgemäss umfasst ein Kippdübel ein sich entlang einer Mittelachse erstreckendes Schraubenelement mit einem Aussengewinde, ein sich entlang einer Hauptachse erstreckendes Bügelelement und ein Mutterelement mit einem Innengewinde, in welches das Aussengewinde eingreift. Das Mutterelement ist um eine Schwenkachse schwenkbar in mindestens einer Lageröffnung im Bügelelement gelagert. Das Mutterelement ist dabei derart in der Lageröffnung gelagert, dass das Bügelelement bei feststehendem Mutterelement um das Mutterelement verschwenkbar ist. Das Bügelelement ist von einer Montagelage, in welcher die Hauptachse im Wesentlichen parallel zur Mittelachse verläuft, in eine Befestigungslage, in welcher die Hauptachse im Wesentlichen quer zur Mittelachse verläuft, verschwenkbar. Das Bügelelement wird dabei um die Schwenkachse verschwenkt. Das Bügelelement ist bei Betätigung des Schraubenelementes in Richtung der Mittelachse bewegbar. Der Kippdübel weist weiterhin mindestens ein Führungselement zur Führung des Bügelelementes bei Betätigung des Schraubenelements auf.

Durch die Anordnung des Führungselementes zur Führung des Bügelelementes bei der Montage ergeht der Vorteil, dass das Bügelelement bei Betätigung des Schraubenelementes entsprechend geführt wird. Hierdurch entfällt beispielsweise der Einsatz von einem zusätzlichen Werkzeug. Weiter ist das Bügelelement durch die Führung einfacher zu montieren.

Die Schwenkachse steht vorzugsweise rechtwinklig zur Hauptachse und das Innengewinde erstreckt sich vorzugsweise rechtwinklig zur Schwenkachse.

In der Montagelage liegt das Bügelelement vorzugsweise derart, dass das Schraubenelement gemeinsam mit dem Bügelelement in eine Montageöffnung eingeschoben werden kann. In der Befestigungslage steht das Bügelelement quer zur Mittelachse. In der Befestigungslage liegt die Schraube typischerweise mit ihrem Schraubenkopf direkt oder indirekt an einem Wandbereich an und das Bügelelement liegt an einem anderen Wandbereich an. Der Teil des Aussengewindes, der zwischen den beiden Wandbereichen liegt, erstreckt sich durch eine Montageöffnung.

Vorzugsweise stellt mindestens eines der Führungselemente eine Führung für das Bügelelement bei der Bewegung von der Montagelage in die Befestigungslage bereit. Dieses Führungselement führt das Bügelelement bei seiner Kippbewegung um die Schwenkachse. Hierdurch wird das Bügelelement automatisch in die korrekte Lage gebracht. Ein händisches Ausrichten, was beispielweise durch unkontrolliertes Schütteln erreicht werden kann, entfällt somit.

Vorzugsweise stellt ein anderes der mindestens einen Führungselemente einen Anschlag für das Bügelelement bei einer Betätigung des Schraubenelementes bereit, derart, dass das Bügelelement am Führungselement ansteht und daher an einer Drehung um die Mittelachse gehindert ist und eine Längsbewegung in Richtung der Mittelachse erfährt.

In einer besonders bevorzugtenWeiterbildung sind beide Führungselemente, nämlich das die Führung für das Bügelelement bei der Bewegung von der Montagelage in die Befestigungslage bereitstellende Führungselement und das den Anschlag für das Bügelelement bei einer Betätigung des Schraubenelementes bereitstellende Führungselement vorhanden.

In einer anderen bevorzugten Weiterbildung kann auch nur das eine oder das andere Führungselement angeordnet werden.

Mit dem Führungselement, welches eine Führung für das Bügelelement bei der Bewegung von der Montagelage in die Betätigungslage bereitstellt, wird eine Führung für den Kippvorgang des Bügelelementes erreicht. Hierdurch ergeht der Vorteil, dass der Kippdübel in nahezu jeder beliebigen Lage montiert werden kann, weil die Kippbewegung geführt ist.

Mit dem Führungselement, welches einen Anschlag bereitstellt, kann die Drehung des Bügelelementes bei der Betätigung des Schraubenelementes verhindert werden. Das vom Schraubenelement auf das Bügelelement wirkende Drehmoment wird entsprechend kompensiert.

Die beiden Führungselemente sind vorzugsweise separat bzw. unabhängig voneinander am Bügelelement angeordnet.

Vorzugsweise weist das Bügelelement zwei mit einem Abstand zueinander liegende Seitenabschnitte auf, welche durch einen Querabschnitt miteinander verbunden sind, wobei das Mutterelement in Lageröffnungen in den Seitenabschnitten gelagert ist und wobei das Schraubenelement sich zwischen den beiden Seitenabschnitten hindurch erstreckt.

Durch diese Ausbildung wird ein Bügelelement geschaffen, welches eine gewisse Steifigkeit aufweist.

Die Seitenabschnitte erstrecken sich entlang der Hauptachse. Der Querabschnitt erstreckt sich nur über einen Teilbereich der Seitenabschnitte, so dass in einem Bereich zwischen den beiden Seitenabschnitten kein Querbereich vorhanden ist.

Die folgenden Erläuterungen betreffen eine Weiterbildung gemäss einer ersten Ausführungsform, die nicht Teil der Erfindung ist.

Vorzugsweise ist das die Führung von der Montagelage in die Befestigungslage bereitstellende Führungselement eine am Bügelelement angeordnete Führungslasche, wobei das Schraubenelement auf die Führungslasche wirkt, derart, dass das Bügelelement bei Betätigung des Schraubenelements verschwenkt wird.

Vorzugsweise ist die Führungslasche am Bügelelement angeformt und bildet einen integralen Bestandteil des Bügelelementes.

Vorzugsweise wirkt das Schraubenelement mit seiner Stirnfläche auf die Führungslasche. Vorzugsweise weist die Führungslasche eine Anschlagsfläche auf, auf welche das Schraubenelement einwirkt. Die Anschlagsfläche ist vorzugsweise konkav gerundet, wobei die Rundung vorzugsweise um Schwenkachse konkav gerundet ist. In einer anderen Variante ist die Anschlagsfläche als ebene Fläche ausgebildet.

Vorzugsweise ist die Führungslasche an ihrem freien Ende mit einer Abkröpfung ausgebildet, welche vorzugsweise derart ausgebildet ist, dass bei einem Kontakt mit dem Aussengewinde ein Flächenkontakt zwischen Abkröpfung und Aussengewinde bereitstellbar ist.

Die Abkröpfung hat den Vorteil, dass es nicht zu einem Verharken zwischen dem freien Ende der Führungslasche und dem Aussengewinde kommt.

Vorzugsweise ist die Abkröpfung zum Aussengewinde hin konkav gerundet.

Vorzugsweise ist die Führungslasche am Querabschnitt und/oder am Seitenabschnitt angeformt und ragt in den Zwischenraum zwischen den beiden Seitenabschnitten ein.

Hierdurch kann eine besonders einfache Struktur des Bügelelementes geschaffen werden.

Vorzugsweise weist der Kippdübel weiterhin ein Lagerelement auf, wobei das Lagerelement einen Lagerabschnitt aufweist, in welchem das Schraubenelement drehbar gelagert ist.

Vorzugsweise ist das den Anschlag bereitstellende Führungselement eine am Lagerelement angeordnete Führungsfläche, welche sich beabstandet und parallel zur Mittelachse erstreckt, derart, dass das Bügelelement bei einer Schraubenbetätigung an die Führungsfläche anschlägt.

Besonders bevorzugt sind zwei beabstandet zueinander und parallel zueinander verlaufende Führungsflächen angeordnet, wobei das Bügelelement mit beiden Führungsflächen in Kontakt ist.

Vorzugsweise weist das Lagerelement aussenseitig einen Anschlagsabschnitt zum direkten oder indirekten Anschlag an einen Wandbereich auf. Beim indirekten Anschlag steht der Anschlagsabschnitt vorzugsweise mit einer Unterlegscheibe in Kontakt.

Vorzugsweise ist der Lagerabschnitt, insbesondere aussenseitig, mit einem Aufnahmeabschnitt ausgebildet, wobei der Aufnahmeabschnitt eine Lagerstelle für ein Toilettenabdeckungselement, wie ein Toilettensitzring oder ein Toilettendeckel, bereitstellt bzw. bildet. Der Aufnahmeabschnitt kann beispielsweise ein zylindrischer Zapfen sein.

Vorzugsweise weist das Schraubenelement einen Schraubenkopf auf, von welchem sich das Aussengewinde wegerstreckt, wobei im Bereich des Schraubenkopfes eine Unterlegscheibe angeordnet ist.

Die folgenden Erläuterungen betreffen eine Weiterbildung gemäss einer zweiten Ausführungsform. Gemäss der zweiten Ausführungsform umfasst der Kippdübel weiterhin ein Lagerelement, wobei das Lagerelement einen Lagerabschnitt aufweist, in welchem das Schraubenelement drehbar gelagert ist, und wobei vom Lagerabschnitt ein parallel zum Schraubenelement verlaufenden Stegabschnitt absteht. Das den Anschlag bereitstellende Führungselement ist mindestens eine am Stegabschnitt angeordnete Führungsfläche, welche sich beabstandet und parallel zur Mittelachse erstreckt, derart, dass das Bügelelement bei einer Betätigung des Schraubenelements an die Führungsfläche anschlägt.

Vorzugsweise weist das die Führung von der Montagelage in die Befestigungslage bereitstellende Führungselement eine am Stegabschnitt angeordnete Führungsfläche und eine am Bügelelement angeordnete Lasche auf. Die Lasche kommt bei einer Bewegung aus der Montagelage in Kontakt mit der Führungsfläche. Die Führungsfläche und die Lasche sind derart ausgebildet, dass bei einer Bewegung des Bügelelementes aus der Montagelage heraus das Bügelelement in die Befestigungslage verschwenkbar ist.

Mit anderen Worten gesagt wird die Bewegung des Bügelelements von der Montagelage in die Befestigungslage durch das Zusammenspiel der Führungsfläche und der Lasche gesteuert. Die Lasche gleitet dabei über die Führungsfläche. Aufgrund der Form der Führungsfläche und der Bewegung des Bügelelementes entlang der Mittelachse gleitet die Lasche über die Führungsfläche wodurch es zum besagten Verschwenken des Bügelelementes kommt.

Vorzugsweise wird die Bewegung des Bügelelements von der Montagelage in die Befestigungslage ausschliesslich durch die Führungsfläche und die Lasche bereitgestellt. Es handelt sich um eine rein mechanische Bewegung zwischen der Lasche und der Führungsfläche, wobei keine unterstützenden Elemente, wie Federn oder dergleichen angeordnet sind.

Vorzugsweise ist die Führungsfläche endseitig, insbesondere an der Stirnseite, am Stegabschnitt angeordnet. Hierdurch ergeht der Vorteil, dass das Bügelelement möglichst lang ausgebildet werden kann.

Vorzugsweise ist die Führungsfläche um eine quer zur Mittelachse verlaufende Krümmungsachse gekrümmt ausgebildet. Die derartige Ausbildung der Führungsfläche hat den Vorteil, dass eine gleichmässige Gleitbewegung der Lasche auf der Führungsfläche erreicht werden kann.

Vorzugsweise weist der Stegabschnitt eine Anschlagsfläche auf, wobei das Bügelelement bei der Bewegung von der Befestigungslage in die Montagelage an der Anschlagsfläche ansteht und bei weiterer Bewegung in die Montagelage verschwenkt wird, derart dass das Bügelelement so verschwenkt wird, dass die Hauptachse des Bügelelements im Wesentlichen parallel zum Mittelachse zu liegen kommt.

Vorzugsweise weist das Schraubenelement an der Schraubenspitze eine um die Mittelachse umlaufende Rille auf, mit welcher das Schraubenelement im Eingriff mit einer Lagerstelle am Stegabschnitt ist. Hierdurch ergeht der Vorteil, dass das Schraubenelement an zwei Lagerstellen geführt ist, was für die Betätigung vorteilhaft ist.

Bei der Erdindung schliesst sich dem Aussengewinde des Schraubenelements endseitig ein gewindeloser Abschnitt an, wobei in der Montagelage das Aussengewinde nicht mehr im Eingriff mit dem Innengewinde des Mutterelements ist, wobei ein Federelement das Bügelelement mit dem Mutterelement gegen das Aussengewinde drückt, derart dass bei einer Verdrehung des Schraubenelements der Eingriff zwischen Aussengewinde und Innengewinde wieder herstellbar ist.

Das Federelement ist vorzugsweise integral am Stegabschnitt angeformt und das Mutterelement wird bei der Bewegung in die Montagelage gegen das Federelement gedrückt, so dass dieses entsprechend gespannt wird.

Vorzugsweise weist das Schraubenelement einen Aufnahmeabschnitt auf, wobei der Aufnahmeabschnitt eine Lagerstelle für ein Toilettenabdeckungselement, wie ein Toilettensitzring oder ein Toilettendeckel, bereitstellt.

Vorzugsweise weist das Schraubenelement aussenseitig einen Anschlagsabschnitt zum direkten oder indirekten Anschlag an einen Wandbereich auf. Beim indirekten Anschlag weist der Kippdübel vorzugsweise eine Unterlegscheibe auf, wobei über die Unterlegscheibe der Schraubenkopf an einem oberen Wandbereich des Sanitärartikels abgestützt ist. Vorzugsweise ist zwischen Unterlegscheibe und dem Sanitärartikel eine Gummischeibe angeordnet.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Explosionsdarstellung eines Kippdübels nach einer ersten Ausführungsform, die nicht Teil der Erfindung ist;

- Fig. 2: eine Schnittdarstellung des Kippdübels in der Montagelage;
- Fig. 3: eine Schnittdarstellung des Kippdübels nach Figur 1 zwischen Montagelage und Befestigungslage;
- Fig. 4: eine weitere Schnittdarstellung des Kippdübels nach Figur 1 zwischen Montagelage und Befestigungslage;
- Fig. 5: eine Schnittdarstellung des Kippdübels nach Figur 1 in der Befestigungslage; und
- Fig. 6: eine weitere Schnittdarstellung;
- Fig. 7: eine perspektivische Ansicht eines Kippdübels nach einer bevorzugten zweiten Ausführungsform;
- Fig. 8: eine perspektivische Ansicht des Kippdübels nach Figur 7;
- Fig. 9: eine Schnittdarstellung des Kippdübels nach Figur 7 zwischen Montagelage und Befestigungslage;
- Fig. 10: eine weitere Schnittdarstellung des Kippdübels nach Figur 7 zwischen Montagelage und Befestigungslage;
- Fig. 11: eine Seitenansicht des Kippdübels nach Figur 7 in der Befestigungslage;
- Fig. 12: eine Detailansicht des Kippdübels nach einer der vorhergehenden Figuren 7 bis 11;
- Fig. 13: eine weitere Detailansicht des Kippdübels nach einer der vorhergehenden Figuren 7 bis 12.

### BESCHREIBUNG BEVORZUGTER AUSFÜHRUNGSFORMEN

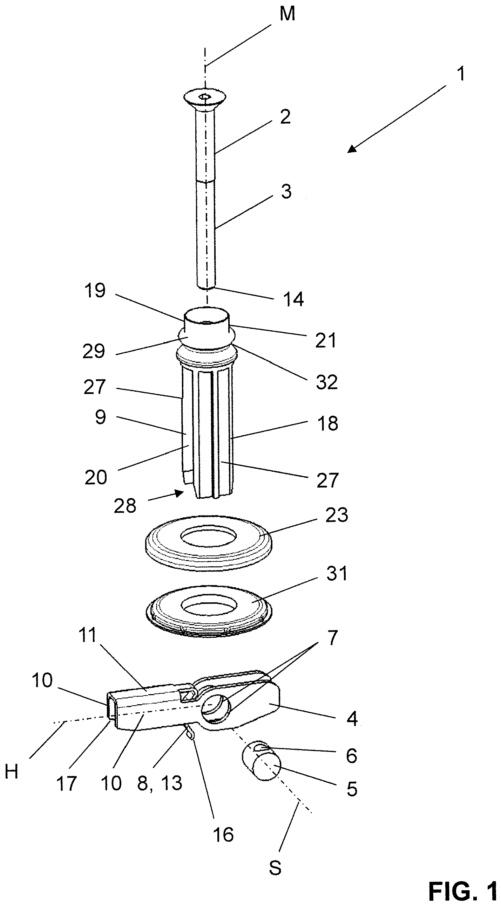

In den Figuren 1 bis 6 wird ein Kippdübel 1 gezeigt. Der Kippdübel 1 umfasst ein Schraubenelement 2, ein Bügelelement 4 und ein Mutterelement 5. Der Kippdübel 1 dient der Verbindung mit einem Sanitärartikel 30, wobei der Kippdübel 1 durch eine Montageöffnung 24 hindurchgeführt wird und anschliessend zu Wandbereichen 25, 26, die sich der Montageöffnung 24 anschliessen, verspannt wird. Das Bügelelement 4 kommt mit einer der beiden Wandflächen 25, 26 und das Schraubenelement kommt mit der anderen der beiden Wandflächen 26, 25 in Kontakt, wobei der Kippdübel 1 durch Betätigung des Schraubenelements 2 entsprechend verspannt wird.

Das Schraubenelement 2 erstreckt sich entlang einer Mittelachse M und weist ein Aussengewinde 3 auf. Weiter weist das Schraubenelement 2 in der gezeigten Ausführungsform einen Schraubenkopf 22 auf. Das Aussengewinde 3 ist an einem Schaft, der sich vom Schraubenkopf 22 weg erstreckt, angeordnet.

Das Bügelelement 4 erstreckt sich entlang einer Hauptachse H und weist hier zwei mit einem Abstand A beabstandet zueinander liegende Seitenabschnitte 10 und einen die Seitenabschnitte 10 verbindenden Querabschnitt 11 auf. Das Schraubenelement 2 erstreckt sich zwischen die beiden Seitenabschnitte 10 hindurch. Von der perspektivischen Abbildung gemäss der Figur 1 kann gut erkannt werden, dass sich der Querabschnitt 11 nicht über die vollständige Länge der Seitenabschnitte 10 erstreckt. Im Bereich der Lageröffnungen 7 ist der Querabschnitt nicht vorhanden.

Das Mutterelement 5 weist ein Innengewinde 6 auf, in welches das Aussengewinde 3 des Schraubenelements 2 eingreift. Das Mutterelement 5 ist um eine Schwenkachse S schwenkbar in mindestens einer Lageröffnung 7 im Bügelelement 4 gelagert. In der gezeigten Ausführungsform sind zwei beabstandet zueinander angeordnete Lageröffnungen 7 in den Seitenabschnitten 10 angeordnet.

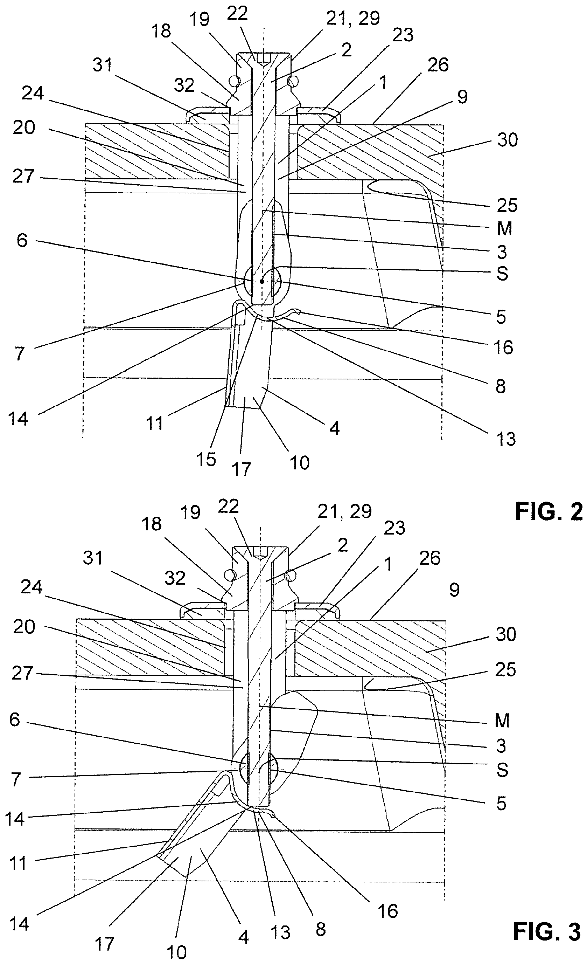

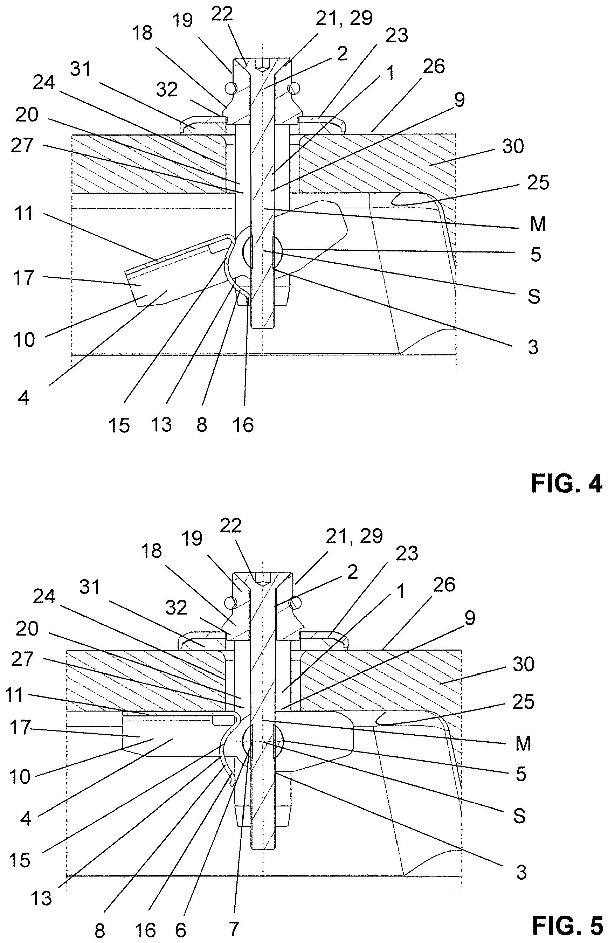

Das Bügelelement 4 ist von einer Montagelage, so wie in der Figur 2 gezeigt, in eine Befestigungslage, wie in der Figur 5 gezeigt, verschwenkbar. Das Bügelelement 4 wird dabei um die Schwenkachse S verschwenkt. In der Montagelage, so wie in der Figur 2 gezeigt, liegt das Bügelelement 4 mit seiner Hauptachse H im Wesentlichen parallel zur Mittelachse M des Schraubenelements 2. Hierdurch kann der Kippdübel 1 durch eine Montageöffnung 24 hindurchgeführt werden. In der Befestigungslage, so wie in der Figur 5 gezeigt, verläuft die Hauptachse H im Wesentlichen quer, also rechtwinklig, zur Mittelachse M. Dabei kommt das Bügelelement 4 mit dem unteren Wandbereich 25, der sich der Montageöffnung 24 anschliesst, in Kontakt. Das Bügelelement 4 ist dabei bei Betätigung des Schraubenelementes 2 in Richtung der Mittelachse bewegbar. Hierbei schraubt sich das Schraubenelement 2 mit seinem Aussengewinde 3 in das Innengewinde 6 des Mutterelementes 5.

Der Kippdübel 1 umfasst weiterhin mindestens ein Führungselement 8, 9 zur Führung des Bügelelementes 4 bei Betätigung des Schraubenelementes 2. In der gezeigten Ausführungsform sind zwei Führungselemente 8, 9 angeordnet. Es ist aber auch denkbar, dass nur eines der beiden Führungselemente 8, 9 angeordnet wird. In der Folge werden nun beide Führungselemente 8, 9 gemeinsam erläutert, wobei die Erläuterungen gleichermassen auch auf die Anordnung von nur einem der beiden Führungselemente 8, 9 anwendbar sind.

Eines der Führungselemente, in den Figuren mit den Bezugszeichen 8 bezeichnet, dient der Führung für das Bügelelement 4 bei der Bewegung von der Montagelage in die Befestigungslage. Das Führungselement 8 stellt demnach eine Führung für das Bügelelement 4 bei dessen Kippbewegung um die Schwenkachse S bereit. Das Führungselement 8 weist in der gezeigten Ausführungsform die Gestalt einer Führungslasche 13 auf. Das Schraubenelement 2 wirkt auf die Führungslasche 13. Bei sich einschraubenden Schraubenelement 2 in das Innengewinde 6 kommt die Stirnfläche 14 des Schraubenelementes 2 in Kontakt mit der Führungslasche 13. Das Schraubenelement 2 wirkt dabei derart auf die Führungslasche 13, dass das Bügelelement bei weiterer Betätigung des Schraubenelementes 2 aktiv geführt verschwenkt wird.

Ausgehend von der Montagelage gemäss der Figur 2 wird das Schraubenelement 2 entsprechend betätigt. Durch die Betätigung wird das Mutterelement 5 zusammen mit dem Bügelelement 4 nach oben in Richtung des Schraubenkopfes 22 bewegt. Hierbei kommt die Stirnfläche 14 in Kontakt mit der Führungslasche 13. Aufgrund der Ausbildung der Führungslasche 13 wird bei weiterer Betätigung des Schraubenelementes 2 das Bügelelement 4 geführt verschwenkt. In der Figur 4 wird die verschwenkte Position gezeigt. Bei weiterer Betätigung des Schraubenelementes 2 wird dann die Befestigungslage, so wie in der Figur 5 gezeigt, erreicht.

Die Führungslasche 13 weist eine Anschlagsfläche 15 auf, auf welche das Schraubenelement 2 einwirkt. Die Anschlagsfläche 15 der gezeigten Ausführungsform ist konkav gerundet ausgebildet. Das heisst, das Schraubenelement 2 trifft mit seiner Stirnfläche 14 auf die konkave Rundung der Anschlagsfläche 15 auf. Die konkave Rundung erstreckt sich bevorzugt um die Schwenkachse S. Die Anschlagsfläche 15 kann in einer anderen, hier nicht gezeigten Ausführungsform, auch als ebene Fläche ausgebildet sein. Die ebene Fläche würde sich dann mit Blick auf die Figur 2 in der Montagelage winklig geneigt zur Mittelachse M des Schraubenelementes 2 erstrecken, so dass die Führungslasche 13 dann die gleiche Wirkung erfährt wie mit der konkaven Rundung.

Weiter weist die Führungslasche 13 an ihrem freien Ende eine Abkröpfung 16 auf. Die Abkröpfung 16 ist dabei derart gerundet, dass bei einem Kontakt mit dem Aussengewinde 3 eine Art Flächenkontakt zwischen Abkröpfung 16 und Aussengewinde 3 bereitstellbar ist. Die Abkröpfung 16 hat den Vorteil, dass ein Verhaken zwischen dem Aussengewinde 3 und dem freien Ende der Führungslasche 13 verhindert werden kann.

Ein weiteres Führungselement 9 bildet einen Anschlag für das Bügelelement 4 bei einer Betätigung des Schraubenelementes 2. Der mechanische Anschlag wird derart gebildet, dass das Bügelelement 4 am Führungselement 9 ansteht und daher an einer Drehung um die Mittelachse M gehindert ist und eine Längsbewegung in Richtung der Mittelachse M erfährt.

In der gezeigten Ausführungsform ist das Führungselement 9 eine Führungsfläche 20. Die Führungsfläche 20 ist hier an einem Lagerelement 18 angeordnet. Das Lagerelement 18 weist einen Lagerabschnitt 19 auf, in welchem das Schraubenelement 2 verschwenkbar gelagert ist. Vom Lagerabschnitt 19 erstreckt sich dann die Führungsfläche 20 in Richtung der Mittelachse M weg. Hier ist die Führungsfläche 20 Teil eines Stegabschnittes 27, welcher sich vom Lagerabschnitt 19 weg erstreckt. In der gezeigten Ausführungsform sind zwei Stegabschnitte 27 mit jeweils einer Führungsfläche 20 vorhanden. Die Stegabschnitte 27 bilden einen Zwischenraum 28, in welchem das Bügelelement 4 liegt und bewegbar ist. Der Zwischenraum 28 wird seitlich durch die Führungsflächen 20 entsprechend begrenzt.

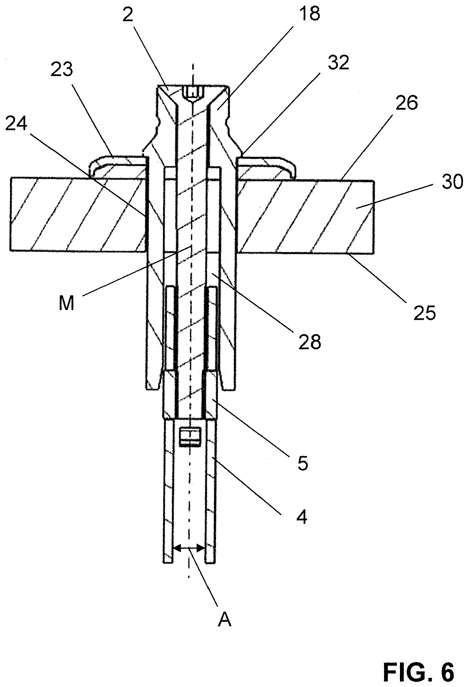

Bei einer Betätigung des Schraubenelementes 2 wirken nun die beiden Führungsflächen 20 als seitliche Anschläge und es wird somit verhindert, dass sich das Bügelelement 4 bei Betätigung des Schraubenelementes 2 drehen kann. Dies kann insbesondere von der Figur 6 gut erkannt werden.

Der Lagerabschnitt 19 ist, insbesondere aussenseitig, mit einem Aufnahmeabschnitt 29 ausgebildet. Der Aufnahmeabschnitt 29 stellt in der gezeigten Ausführungsform eine Lagerstelle für ein Toilettenabdeckungselement, wie ein Toilettensitzring oder ein Toilettendeckel, bereit.

Weiter weist der Lagerabschnitt 19 hier einen seitlich umlaufenden Anschlagsabschnitt 32 auf, welcher mit der Unterlegscheibe 23 im Kontakt ist. Der Anschlagsabschnitt 32 kann in anderen Ausführungsformen auch direkt mit dem Wandbereich 26 in Kontakt kommen.

Weiter umfasst der Kippdübel 1 in der gezeigten Ausführungsform eine Unterlegscheibe 23. Die Unterlegscheibe 23 ist hier im Bereich des Lagerabschnittes 19 des Lagerelementes 18 angeordnet. Die Unterlegscheibe 23 weist dabei einen Durchmesser beziehungsweise eine Ausdehnung auf, welche grösser ist als die Montageöffnung 24. Dabei liegt die Unterlegscheibe 23 an einem oberen Wandbereich 26, der sich der Montageöffnung 24 anschliesst, an. Über die Unterlegscheibe 23 wird eine Abstützung des Schraubenkopfes 22 erreicht.

Unter der Unterlegscheibe 23 ist hier ein Scheibenelement 31 aus weichem Kunststoff oder Gummi angeordnet.

Das Schraubenelement 2, das Bügelelement 4 und das Mutterelement 5 sind vorzugsweise aus Metall. Das Lagerelement 18 kann sowohl aus Metall als auch aus Kunststoff hergestellt werden.

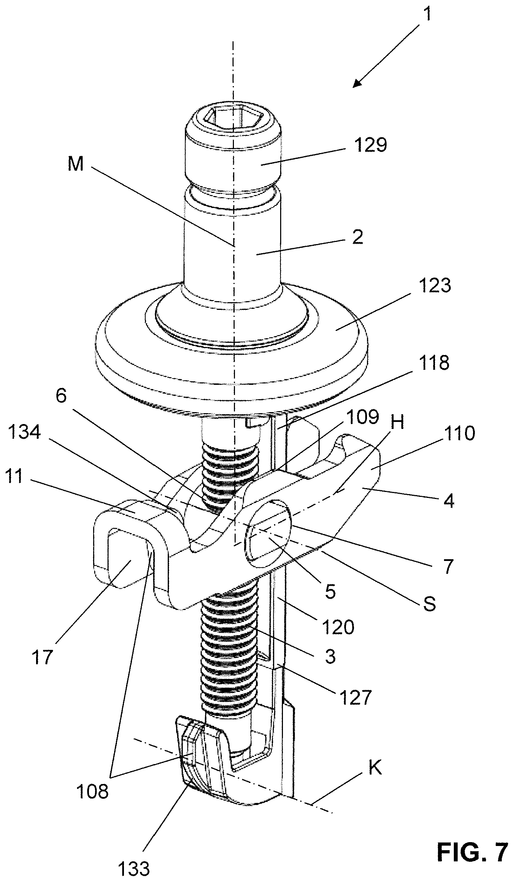

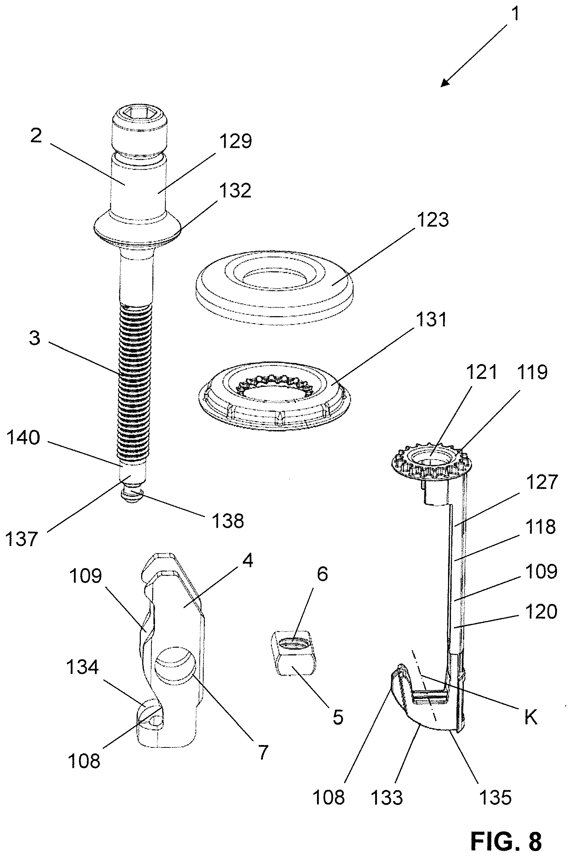

In den Figuren 7 bis 14 wird eine Ausführungsform eines Kippdübels 1 gezeigt. Der Kippdübel 1 umfasst ein Schraubenelement 2, ein Bügelelement 4 und ein Mutterelement 5. Der Kippdübel 1 dient der Verbindung mit einem Sanitärartikel 30, wobei der Kippdübel 1 durch eine Montageöffnung 24 hindurchgeführt wird und anschliessend zu Wandbereichen 25, 26, die sich der Montageöffnung 24 anschliessen, verspannt wird. Das Bügelelement 4 kommt mit einer der beiden Wandflächen 25, 26 und das Schraubenelement kommt mit der anderen der beiden Wandflächen 26, 25 in Kontakt, wobei der Kippdübel 1 durch Betätigung des Schraubenelements 2 entsprechend verspannt wird.

Das Schraubenelement 2 erstreckt sich entlang einer Mittelachse M und weist ein Aussengewinde 3 auf. Weiter weist das Schraubenelement 2 in der gezeigten Ausführungsform einen Schraubenkopf 22 auf. Das Aussengewinde 3 ist an einem Schaft, der sich vom Schraubenkopf 22 weg erstreckt, angeordnet.

Das Bügelelement 4 erstreckt sich entlang einer Hauptachse H und weist hier zwei mit einem Abstand A beabstandet zueinander liegende Seitenabschnitte 10 und einen die Seitenabschnitte 10 verbindenden Querabschnitt 11 auf. Das Schraubenelement 2 erstreckt sich zwischen die beiden Seitenabschnitte 10 hindurch. Von der perspektivischen Abbildung gemäss der Figur 7 kann gut erkannt werden, dass sich der Querabschnitt 11 nicht über die vollständige Länge der Seitenabschnitte 10 erstreckt. Im Bereich der Lageröffnungen 7 ist der Querabschnitt 11 nicht vorhanden.

Das Mutterelement 5 weist ein Innengewinde 6 auf, in welches das Aussengewinde 3 des Schraubenelements 2 eingreift. Das Mutterelement 5 ist um eine Schwenkachse S schwenkbar in mindestens einer Lageröffnung 7 im Bügelelement 4 gelagert. In der gezeigten Ausführungsform sind zwei beabstandet zueinander angeordnete Lageröffnungen 7 in den Seitenabschnitten 10 angeordnet.

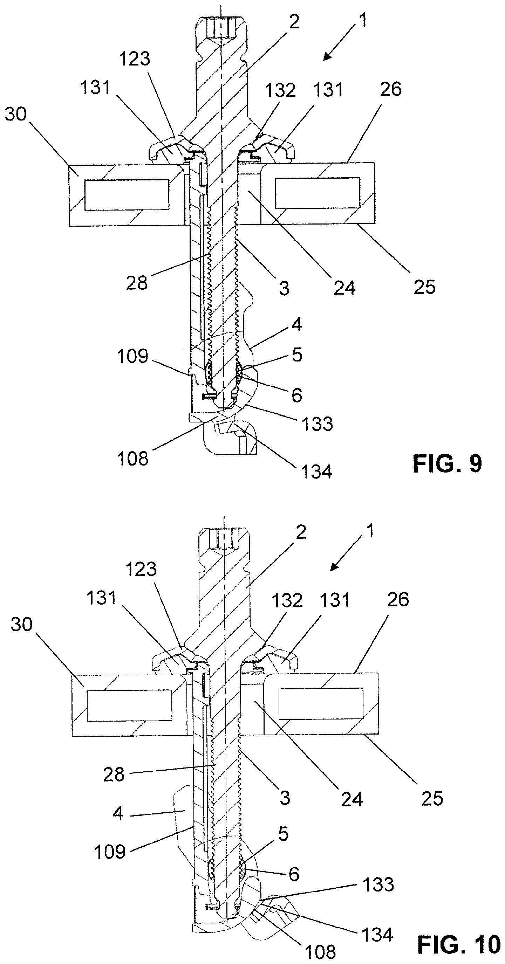

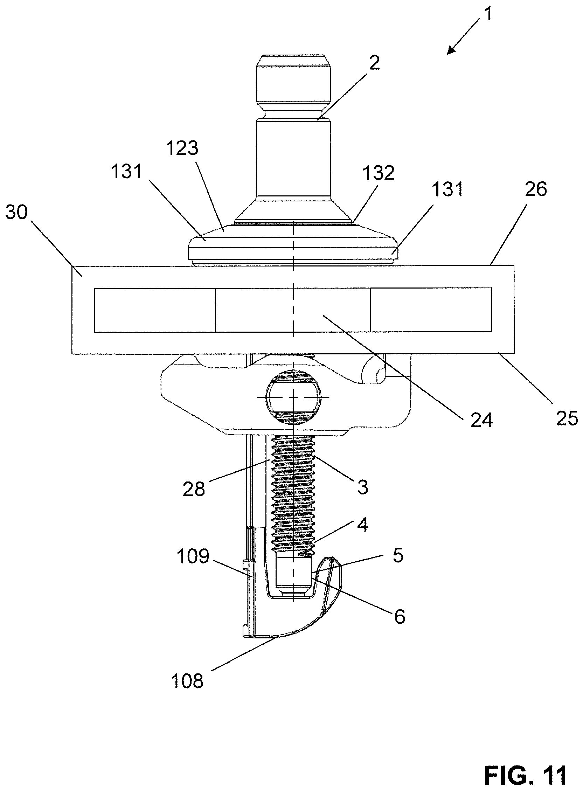

Das Bügelelement 4 ist von einer Montagelage, so wie in der Figur 9 gezeigt, in eine Befestigungslage, wie in der Figur 11 gezeigt, verschwenkbar. In der Figur 10 wird eine Zwischenlage dargestellt. Das Bügelelement 4 wird dabei um die Schwenkachse S verschwenkt. In der Montagelage, so wie in der Figur 9 gezeigt, liegt das Bügelelement 4 mit seiner Hauptachse H im Wesentlichen parallel zur Mittelachse M des Schraubenelements 2. Hierdurch kann der Kippdübel 1 durch eine Montageöffnung 24 hindurchgeführt werden. In der Befestigungslage, so wie in der Figur 10 gezeigt, verläuft die Hauptachse H im Wesentlichen quer, also rechtwinklig, zur Mittelachse M. Dabei kommt das Bügelelement 4 mit dem unteren Wandbereich 25, der sich der Montageöffnung 24 anschliesst, in Kontakt. Das Bügelelement 4 ist dabei bei Betätigung des Schraubenelementes 2 in Richtung der Mittelachse bewegbar. Hierbei schraubt sich das Schraubenelement 2 mit seinem Aussengewinde 3 in das Innengewinde 6 des Mutterelementes 5.

Der Kippdübel 1 umfasst weiterhin ein Lagerelement 118. Das Lagerelement 118 weist einen Lagerabschnitt 119 auf, in welchem das Schraubenelement 2 drehbar gelagert ist, und wobei vom Lagerabschnitt 119 ein parallel zum Schraubenelement 2 verlaufenden Stegabschnitt 127 absteht.

Der Kippdübel 1 umfasst weiterhin mindestens ein Führungselement 108, 109 zur Führung des Bügelelementes 4 bei Betätigung des Schraubenelementes 2. In der gezeigten Ausführungsform sind zwei Führungselemente 108, 109 angeordnet. Es ist aber auch denkbar, dass nur eines der beiden Führungselemente 108, 109 angeordnet wird. In der Folge werden nun beide Führungselemente 108, 109 gemeinsam erläutert, wobei die Erläuterungen gleichermassen auch auf die Anordnung von nur einem der beiden Führungselemente 108, 109 anwendbar sind.

Eines der Führungselemente, in den Figuren mit den Bezugszeichen 108 bezeichnet, dient der Führung für das Bügelelement 4 bei der Bewegung von der Montagelage in die Befestigungslage. Das Führungselement 108 stellt demnach eine Führung für das Bügelelement 4 bei dessen Kippbewegung um die Schwenkachse S bereit. Das Führungselement 108 weist eine am Stegabschnitt 127 angeordnete Führungsfläche 133 und eine am Bügelelement 4 angeordnete Lasche 134 auf. Die Lasche 134 kommt bei einer Bewegung aus der Montagelage in Kontakt mit der Führungsfläche 133. Ausgehend von der Montagelage gemäss der Figur 9 wird das Schraubenelement 2 entsprechend betätigt. Durch die Betätigung wird das Mutterelement 5 zusammen mit dem Bügelelement 4 nach oben in Richtung des Schraubenkopfes 22 bewegt. Hierbei kommt die Lasche 134 in Kontakt mit der Führungsfläche 133. Aufgrund der Ausbildung der Führungsfläche 133 wird bei weiterer Betätigung des Schraubenelementes 2 die Lasche 134 entlang der Führungsfläche geführt, wodurch sich das Bügelelement 4 verschwenkt. In der Figur 10 wird die verschwenkte Position gezeigt. Bei weiterer Betätigung des Schraubenelementes 2 wird dann die Befestigungslage, so wie in der Figur 11 gezeigt, erreicht.

Die Lasche 134 liegt an der Führungsfläche 133 an. Das Anliegen der Lasche 134 an der Führungsfläche 133 wird in den Figuren 9 und 10 gut gezeigt. Bei einem Drehen des Schraubenelements 2 bewegt sich das Mutterelement 5 in Richtung der Mittelachse M nach oben. Hierbei gleitet die Lasche 134 über die Führungsfläche. Die Führungsfläche 133 und die Lasche 134 sind derart ausgebildet, dass bei einer Bewegung des Bügelelementes 4 aus der Montagelage heraus das Bügelelement 4 in die Befestigungslage verschwenkbar ist.

Die Bewegung des Bügelelements 4 von der Montagelage in die Befestigungslage wird ausschliesslich durch die Führungsfläche 133 und die Lasche 134 bereitgestellt. Es handelt sich um eine mechanische Zwangsführung.

Die Führungsfläche 120 ist endseitig, insbesondere an der Stirnseite 135, am Stegabschnitt 127 angeordnet. Weiter ist die Führungsfläche 120 um eine quer zur Mittelachse M verlaufende Krümmungsachse K gekrümmt ausgebildet.

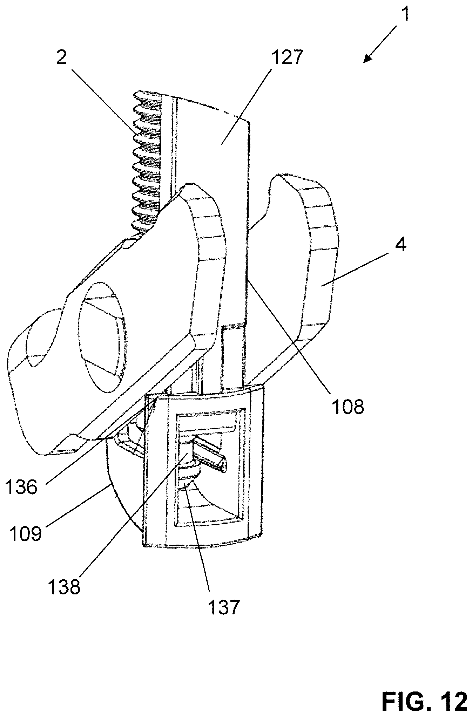

Weiter weist der Stegabschnitt 127 eine Anschlagsfläche 136 auf. Die Anschlagsfläche 136 ist in der Figur 12 dargestellt. Das Bügelelement 4 steht bei der Bewegung von der Befestigungslage in die Montagelage an der Anschlagsfläche 136 an und wird bei weiterer Bewegung in die Montagelage verschwenkt, derart dass das Bügelelement 4 so verschwenkt wird, dass die Hauptachse H des Bügelelements 4 im Wesentlichen parallel zum Mittelachse zu liegen kommt. Von der Position wie in der Figur 12 gezeigt wird das Mutterelement 5 weiter nach unten bewegt, wodurch das Bügelelement 4 verkippt bzw. verschwenkt wird.

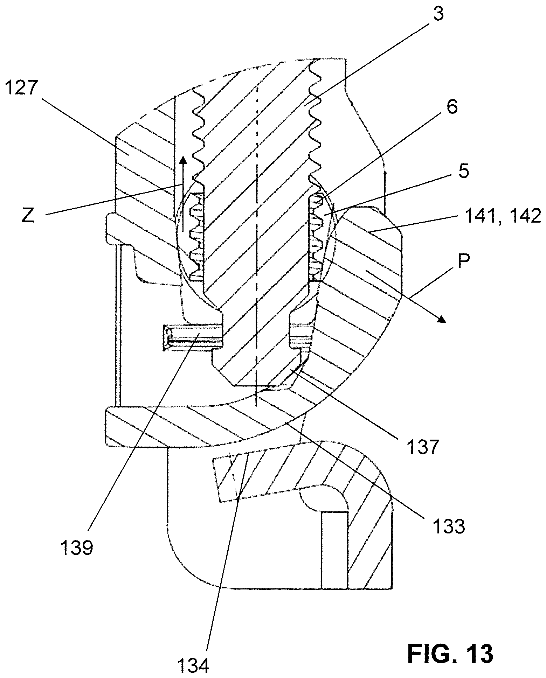

In den Figuren 13 und 14 wird gezeigt, dass das Schraubenelement 2 an der Schraubenspitze 137 eine um die Mittelachse M umlaufende Rille 138 aufweist. Mit dieser Rille 138 ist das Schraubenelement 2 im Eingriff mit einer Lagerstelle 139 am Stegabschnitt 127 ist. Die Lagerstelle ist dabei schlitzförmig ausgebildet und ragt in die Rille 138 ein.

Dem Aussengewinde 3 des Schraubenelements 2 schliesst sich endseitig ein gewindeloser Abschnitt 140 an, wobei in der Montagelage das Aussengewinde 3 nicht mehr im Eingriff mit dem Innengewinde 6 des Mutterelements 5 ist. Hierdruch kann das Schraubenelement 2 in der Montagelage frei gedreht werden. Ein Federelement 141, welches in der Figur 13 dargestellt ist, drückt das Bügelelement 4 mit dem Mutterelement 5 derart gegen das Aussengewinde 3, dass bei einer Verdrehung des Schraubenelements 2 der Eingriff zwischen Aussengewinde 3 und Innengewinde 6 wieder herstellbar ist. Das Federelement 141 wird hier durch ein am Lagerabschnitt 119 angeformte Federlasche 142 bereitgestellt. Die Federlasche 142 wird bei der Bewegung des Mutterelementes 5 in die Montagelage durch das Mutterelement 5 vorgespannt, das heisst in Richtung des Pfeils P nach aussen gedrückt. Durch diese Vorspannung wird das Mutterelement 5 gegen das Aussengewinde nach oben gedrückt, was durch den Pfeil Z gezeigt ist. Aussenseitig weist die Federlasche 142 hier die Führungsfläche 133 auf, über welche die Laschen 134 hinweg gleitet.

Ein weiteres Führungselement 109 bildet einen Anschlag für das Bügelelement 4 bei einer Betätigung des Schraubenelementes 2. Der mechanische Anschlag wird derart gebildet, dass das Bügelelement 4 am Führungselement 109 ansteht und daher an einer Drehung um die Mittelachse M gehindert ist und eine Längsbewegung in Richtung der Mittelachse M erfährt.

In der gezeigten Ausführungsform ist das Führungselement 109 eine Führungsfläche 120. Die Führungsfläche 120 ist hier am Lagerelement 118 angeordnet. Das Lagerelement 118 weist einen Lagerabschnitt 119 auf, in welchem das Schraubenelement 2 verschwenkbar gelagert ist. Vom Lagerabschnitt 119 erstreckt sich dann die Führungsfläche 120 in Richtung der Mittelachse M weg. Hier ist die Führungsfläche 120 Teil eines Stegabschnittes 127, welcher sich vom Lagerabschnitt 119 weg erstreckt. In der gezeigten Ausführungsform ist ein Stegabschnitt 127 mit zwei Führungsflächen 120 vorhanden. Der Stegabschnitt 127 erstreckt sich durch den Zwischenraum zwischen den beiden Seitenabschnitten 110 des Bügelelementes 4 hindurch.

Bei einer Betätigung des Schraubenelementes 2 wirken nun die beiden Führungsflächen 120 als seitliche Anschläge und es wird somit verhindert, dass sich das Bügelelement 4 bei Betätigung des Schraubenelementes 2 drehen kann. Dies kann insbesondere von der Figur 7 gut erkannt werden.

In der zweiten Ausführungsform weist das Schraubenelement 2 einen Aufnahmeabschnitt 129 auf, wobei der Aufnahmeabschnitt 129 eine Lagerstelle 121 für ein Toilettenabdeckungselement, wie ein Toilettensitzring oder ein Toilettendeckel, bereitstellt. Weiter weist das Schraubenelement 2 einen Schraubenkopf 122 auf, von welchem sich das Aussengewinde 3 wegerstreckt, wobei im Bereich des Schraubenkopfes eine Unterlegscheibe 123 angeordnet ist.

Das Schraubenelement 2 weist aussenseitig einen Anschlagsabschnitt 132 zum direkten oder indirekten Anschlag an einen Wandbereich 25, 26 auf. In den Figuren ist der indirekt Anschlag dargestellt. Hier umfasst der Kippdübel 1 eine Unterlegscheibe 123. Die Unterlegscheibe 123 ist hier im Bereich des Lagerabschnittes 119 des Lagerelementes 118 angeordnet. Die Unterlegscheibe 123 weist dabei einen Durchmesser beziehungsweise eine Ausdehnung auf, welche grösser ist als die Montageöffnung 24. Dabei liegt die Unterlegscheibe 23 an einem oberen Wandbereich 26, der sich der Montageöffnung 24 anschliesst, an. Über die Unterlegscheibe 123 wird das Schraubenelement 2 über den Anschlagsabschnitt 132 abgestützt.

Unter der Unterlegscheibe 123 ist hier ein Scheibenelement 131 aus weichem Kunststoff oder Gummi angeordnet.

Das Schraubenelement 2, das Bügelelement 4 und das Mutterelement 5 sind vorzugsweise aus Metall. Das Lagerelement 118 kann sowohl aus Metall als auch aus Kunststoff hergestellt werden.

**BEZUGSZEICHENLISTE**

| | | | |
|---|---|---|---|
| 1 | Kippdübel | 32, 132 | Anschlagsabschnitt |
| 2 | Schraubenelement | 133 | Führungsfläche |
| 3 | Aussengewinde | 134 | Lasche |
| 4 | Bügelelement | 135 | Stirnseite |
| 5 | Mutterelement | 136 | Anschlagsfläche |
| 6 | Innengewinde | 137 | Schraubenspitze |
| 7 | Lageröffnung | 138 | Rille |
| 8, 108 | Führungselement | 139 | Lagerstelle |
| 9, 109 | Führungselement | 140 | gewindeloser Abschnitt |
| 10, 110 | Seitenabschnitt | 141 | Federelement |
| 11 | Querabschnitt | 142 | Federlasche |
| 13 | Führungslasche | | |
| 14 | Stirnfläche | A | Abstand |
| 15 | Anschlagsfläche | H | Hauptachse |
| 16 | Abkröpfung | M | Mittelachse |
| 17 | Zwischenraum | S | Schwenkachse |
| 18, 118 | Lagerelement | K | Krümmungsachse |
| 19, 119 | Lagerabschnitt | P, Z | Pfeile |
| 20, 120 | Führungsfläche | | |
| 21, 121 | Lagerstelle | | |
| 22, 122 | Schraubenkopf | | |
| 23, 123 | Unterlegscheibe | | |
| 24 | Montageöffnung | | |
| 25 | unterer Wandbereich | | |
| 26 | oberer Wandbereich | | |
| 27, 127 | Stegabschnitt | | |
| 28 | Zwischenraum | | |
| 29, 129 | Aufnahmeabschnitt | | |
| 30 | Sanitärartikel | | |
| 31, 131 | Scheibenelement | | |

## Patentansprüche

1. Kippdübel (1) umfassend
ein sich entlang einer Mittelachse (M) erstreckendes Schraubenelement (2) mit einem Aussengewinde (3),
ein sich entlang einer Hauptachse (H) erstreckendes Bügelelement (4) und
ein Mutterelement (5) mit einem Innengewinde (6), in welches das Aussengewinde (3) eingreift,
wobei das Mutterelement (5) um eine Schwenkachse (S) schwenkbar in mindestens einer Lageröffnung (7) im Bügelelement (4) gelagert ist,
wobei das Bügelelement (4) von einer Montagelage, in welcher die Hauptachse (H) im Wesentlichen parallel zur Mittelachse (M) verläuft, in eine Befestigungslage, in welcher die Hauptachse (H) im Wesentlichen quer zur Mittelachse (M) verläuft, verschwenkbar und
wobei das Bügelelement (4) bei Betätigung des Schraubenelementes (2) in Richtung der Mittelachse (M) bewegbar ist,
wobei
der Kippdübel (1) weiterhin mindestens ein Führungselement (8, 9) zur Führung des Bügelelementes (4) bei Betätigung des Schraubenelements (2) aufweist,
wobei eines der mindestens einen Führungselemente (8) eine Führung für das Bügelelement (4) bei der Bewegung von der Montagelage in die Befestigungslage bereitstellt, und
wobei sich dem Aussengewinde (3) des Schraubenelements (2) endseitig ein gewindeloser Abschnitt (140) anschliesst, wobei in der Montagelage das Aussengewinde (3) nicht mehr im Eingriff mit dem Innengewinde (6) des Mutterelements (5) ist, wobei ein Federelement (141) das Bügelelement (4) mit dem Mutterelement (5) gegen das Aussengewinde (3) drückt, derart dass bei einer Verdrehung des Schraubenelements (2) der Eingriff zwischen Aussengewinde (3) und Innengewinde (6) wieder herstellbar ist.

2. Kippdübel (1) nach Anspruch 1, **dadurch gekennzeichnet, dass** ein anderes der mindestens einen Führungselemente (9) einen Anschlag für das Bügelelement (4) bei einer Betätigung des Schraubenelementes (2) bereitstellt, derart, dass das Bügelelement (4) am Führungselement (9) ansteht und daher an einer Drehung um die Mittelachse (M) gehindert ist und eine Längsbewegung in Richtung der Mittelachse (M) erfährt.

3. Kippdübel (1) nach Anspruch 1 oder 2, **dadurch gekennzeichnet, dass** das Bügelelement (4) zwei mit einem Abstand (A) zueinander liegende Seitenabschnitte (10) aufweist, welche durch einen Querabschnitt (11) miteinander verbunden sind, wobei das Mutterelement (5) in Lageröffnung (7) in den Seitenabschnitten (10) gelagert ist und wobei das Schraubenelement (2) sich zwischen den beiden Seitenabschnitten (10) hindurch erstreckt.

4. Kippdübel (1) nach einem der Ansprüche 2 oder 3, **dadurch gekennzeichnet, dass** der Kippdübel (1) weiterhin ein Lagerelement (118) umfasst, wobei das Lagerelement (118) einen Lagerabschnitt (119) aufweist, in welchem das Schraubenelement (2) drehbar gelagert ist, und wobei vom Lagerabschnitt (119) ein parallel zum Schraubenelement (2) verlaufenden Stegabschnitt (127) absteht, wobei das den Anschlag bereitstellende Führungselement (109) mindestens eine am Stegabschnitt (127) angeordnete Führungsfläche (120) ist, welche sich beabstandet und parallel zur Mittelachse (M) erstreckt, derart, dass das Bügelelement (4) bei einer Betätigung des Schraubenelements (2) an die Führungsfläche (120) anschlägt.

5. Kippdübel nach Anspruch 4, **dadurch gekennzeichnet, dass** das die Führung von der Montagelage in die Befestigungslage bereitstellende Führungselement (108) eine am Stegabschnitt (127) angeordnete Führungsfläche (133) und eine am Bügelelement (4) angeordnete Lasche (134) aufweist, wobei die Lasche (134) bei einer Bewegung aus der Montagelage in Kontakt mit der Führungsfläche (133) kommt, und wobei Führungsfläche (133) und die Lasche (134) derart ausgebildet sind, dass bei einer Bewegung des Bügelelementes (4) aus der Montagelage heraus das Bügelelement (4) in die Befestigungslage verschwenkbar ist.

6. Kippdübel nach Anspruch 5, **dadurch gekennzeichnet, dass** die Bewegung des Bügelelements (4) von der Montagelage in die Befestigungslage ausschliesslich durch die Führungsfläche (133) und die Lasche (134) bereitgestellt wird.

7. Kippdübel (1) nach Anspruch 5 oder 6, **dadurch gekennzeichnet, dass** die Führungsfläche (120) endseitig, insbesondere an der Stirnseite (135), am Stegabschnitt (127) angeordnet ist; und/oder dass die Führungsfläche (120) um eine quer zur Mittelachse (M) verlaufende Krümmungsachse (K) gekrümmt ausgebildet ist.

8. Kippdübel (1) nach einem der Ansprüche 4 bis 7, **dadurch gekennzeichnet, dass** der Stegabschnitt (127) eine Anschlagsfläche (136) aufweist, wobei das Bügelelement (4) bei der Bewegung von der Befestigungslage in die Montagelage an der Anschlagsfläche (136) ansteht und bei weiterer Bewegung in die Montagelage verschwenkt wird, derart dass das Bügelelement (4) so verschwenkt wird, dass die Hauptachse (H) des Bügelelements (4) im Wesentlichen parallel zum Mittelachse zu liegen kommt.

9. Kippdübel (1) nach der vorhergehenden Ansprüche, **dadurch gekennzeichnet, dass** das Schraubenelement (2) an der Schraubenspitze (137) eine um die Mittelachse (M) umlaufende Rille (138) aufweist, mit welcher das Schraubenelement (2) im Eingriff mit einer Lagerstelle (139) am Stegabschnitt (127) ist.

10. Kippdübel (1) nach einem vorhergehenden Ansprüche, **dadurch gekennzeichnet,**
**dass** das Schraubenelement (2) einen Aufnahmeabschnitt (129) aufweist, wobei der Aufnahmeabschnitt (29) eine Lagerstelle (121) für ein Toilettenabdeckungselement, wie ein Toilettensitzring oder ein Toilettendeckel, bereitstellt; und/oder
**dass** das Schraubenelement (2) einen Schraubenkopf (122) aufweist, von welchem sich das Aussengewinde (3) wegerstreckt, wobei im Bereich des Schraubenkopfes eine Unterlegscheibe (123) angeordnet ist; und/oder
**dass** das Schraubenelement (2) aussenseitig einen Anschlagsabschnitt (132) zum direkten oder indirekten Anschlag an einen Wandbereich (25, 26) aufweist.

11. Kippdübel (1) nach einem der vorhergehenden Ansprüche, **dadurch gekennzeichnet, dass** das Schraubenelement (2) einen Schraubenkopf (22) aufweist, von welchem sich das Aussengewinde (3) wegerstreckt, wobei im Bereich des Schraubenkopfes eine Unterlegscheibe (23) angeordnet ist.

## Claims

1. Toggle fastener (1) comprising
- a screw element (2) with an external thread (3), extending along a centre axis (M),
- a toggle element (4) extending along a main axis (H) and a nut element (5) with an internal thread (6), in which the external thread (3) engages,
- wherein the nut element (5) is pivotably mounted about a pivot axis (S) in at least one bearing opening (7) in the toggle element (4),
- wherein the toggle element (4) is pivotable from a mounting position, in which the main axis (H) runs substantially parallel to the centre axis (M), into a fastening position, in which the main axis (H) runs substantially transversely to the centre axis (M), and
- wherein the toggle element (4) upon actuation of the screw element (2) is moveable in the direction of the centre axis (M),
- wherein the toggle fastener (1) further comprises at least one guide element (8, 9) for guiding the toggle element in (4) upon actuation of the screw element (2),
- wherein one of the at least one guide elements (8) provides a guide for the toggle element (4) upon the movement from the mounting position into the fastening position,
- and wherein the external thread (3) of the screw element (2) is followed at the end side by a threadless portion (140), wherein in the mounting position the external thread (3) is no longer in engagement with the internal thread (6) of the nut element (5), wherein a spring element (141) presses the toggle element (4) with the nut element (5) against the external thread (3) in such a manner that upon a rotation of the screw element (2) the engagement between external thread (3) and internal thread (6) can be re-established.

2. Toggle fastener (1) according to Claim 1, **characterized in that** another one of the at least one guide elements (9) provides a stop for the toggle element (4) upon an actuation of the screw element (2) in such a manner that the toggle element (4) abuts against the guide element (9) and is therefore prevented from a rotation about the centre axis (M) and is subjected to a longitudinal movement in the direction of the centre axis (M).

3. Toggle fastener (1) according to Claim 1 or 2, **characterized in that** the toggle element (4) comprises two side portions (10) lying spaced apart from one another with a distance (A), which are connected to one another by a transverse portion (11), wherein the nut element (5) is mounted in bearing opening (7) in the side portions (10) and wherein the screw elements (2) extend through between the two side portions (10).

4. Toggle fastener (1) according to one of claims 2 or 3, **characterized in that** the toggle fastener (1) further comprises a bearing element (118), wherein the bearing element (118) comprises a bearing portion (119) in which the screw element (2) is rotatably mounted, and wherein a web portion (127) running parallel to the screw element (2) projects from the bearing portion (119), wherein the guide element (109) providing the stop is at least one guide face (120) is at least one guide face (120) arranged on the web portion (127), which extends spaced apart from and parallel to the centre axis (M) in such a manner that the toggle element (4) upon an actuation of the screw element (2) abuts against the guide face (120).

5. Toggle fastener (1) according to claim 4, **characterized in that** the guide element (108) providing the guidance from the mounting position into the fastening position comprises a guide face (133) arranged on the web portion (127) and a tab (134) arranged on the toggle element (4), wherein the tab (134) upon a movement out of the mounting position comes into contact with the guide face (133), and wherein guide face (133) and the tab (134) are designed in such a manner that upon a movement of the toggle element (4) out of the mounting position the toggle element (4) is pivotable into the fastening position.

6. Toggle fastener according to claim 5, **characterized in that** the movement of the toggle element (4) from the mounting position into the fastening position is exclusively provided by the guide face (133) and the tab (134).

7. Toggle fastener (1) according claim 5 or 6, **characterized in that** the guide face (120) is arranged at the end side, in particular at the front side (135) on the web portion (127), and/or **in that** the guide face (120) is designed curved about a curvature axis (K) running transversely to the centre axis (M).

8. Toggle fastener (1) according to one of claims 4 to 7, **characterized in that** the web portion (127) comprises a stop face (136), wherein the toggle element (4) upon the movement from the fastening position into the mounting position abuts against the stop face (136) and upon further movement is pivoted into the mounting position in such a manner that the toggle element (4) is pivoted so that the main axis (H) of the toggle element (4) comes to lie substantially parallel to the centre axis.

9. Toggle fastener (1) according to the preceding claims, **characterized in that** the screw element (2) comprises on the screw tip (137) a groove (138) circulating about the centre axis (M), with which the screw element (2) is in engagement with a bearing point (139) on the web portion (127).

10. Toggle fastener (1) according to one of the preceding claims, **characterized,**
- **in that** the screw element (2) comprises a receiving portion (129), wherein the receiving portion (29) provides a bearing point (121) for a toilet lid element, such as a toilet seat ring or a toilet lid; and/or
- **in that** the screw element (2) comprises a screw head (122) from which the external thread (3) extends away, wherein in the region of the screw head a washer (123) is arranged; and/or
- **in that** the screw element (2) on the outside comprises a stop portion (132) for the direct or indirect butting-up against a wall region (25, 26).

11. Toggle fastener (1) according to one of the preceding claims, **characterized in that** the screw element (2) comprises a screw head (22), from which the external thread (3) extends away, wherein a washer (23) is arranged in the region of the screw head.

## Revendications

1. Boulon basculant (1) comportant
un élément vis (2) s'étendant le long d'un axe médian (M) et doté d'un filetage extérieur (3),
un élément étrier (4) s'étendant le long d'un axe principal (H) et
un élément écrou (5) doté d'un filetage intérieur (6) dans lequel le filetage extérieur (3) vient en prise, l'élément écrou (5) étant monté pivotant autour d'un axe de pivotement (S) dans au moins une ouverture de support (7) dans l'élément étrier (4),
l'élément étrier (4) pouvant pivoter d'une position de montage, dans laquelle l'axe principal (H) s'étend sensiblement parallèlement à l'axe médian (M), à une position de fixation, dans laquelle l'axe principal (H) s'étend sensiblement transversalement à l'axe médian (M), et
l'élément étrier (4) étant déplaçable en direction de l'axe médian (M) lors de l'actionnement de l'élément vis (2),
le boulon basculant (1) comprenant en outre au moins un élément de guidage (8, 9) servant au guidage de l'élément étrier (4) lors de l'actionnement de l'élément vis (2), l'un parmi l'au moins un élément de guidage (8) produisant un guidage pour l'élément étrier (4) lors du déplacement de la position de montage à la position de fixation,
dans lequel une section sans filetage (140) se raccorde au filetage extérieur (3) de l'élément vis (2) du côté de son extrémité, le filetage extérieur (3) n'étant plus en prise avec le filetage intérieur (6) de l'élément écrou (5) dans la position de montage, un élément ressort (141) pressant l'élément étrier (4) avec l'élément écrou (5) contre le filetage extérieur (3), de telle sorte que, lors d'une rotation de l'élément vis (2), l'entrée en prise entre le filetage extérieur (3) et le filetage intérieur (6) puisse être à nouveau réalisée.

2. Boulon basculant (1) selon la revendication 1, **caractérisé en ce qu'**un autre parmi l'au moins un élément de guidage (9) produit une butée pour l'élément étrier (4) lors d'un actionnement de l'élément vis (2), de telle sorte que l'élément étrier (4) s'appuie contre l'élément de guidage (9) et soit donc empêché de tourner autour de l'axe médian (M) et subisse un déplacement longitudinal en direction de l'axe médian (M).

3. Boulon basculant (1) selon la revendication 1 ou 2, **caractérisé en ce que** le boulon basculant (4) comprend deux sections latérales (10) situées à une distance (A) l'une par rapport à l'autre, lesquelles sont reliées l'une à l'autre par une section transversale (11), l'élément écrou (5) étant monté dans l'ouverture de support (7) dans les sections latérales (10) et l'élément vis (2) s'étendant entre les deux sections latérales (10) à travers celles-ci.

4. Boulon basculant (1) selon l'une des revendications 2 ou 3, **caractérisé en ce que** le boulon basculant (1) comporte en outre un élément de support (118), l'élément de support (118) comprenant une section de support (119) dans laquelle l'élément vis (2) est monté rotatif, et une section à nervure (127) s'étendant parallèlement à l'élément vis (2) faisant saillie à partir de la section de support (119), l'élément de guidage (109) produisant la butée étant au moins une surface de guidage (120) disposée sur la section à nervure (127), laquelle surface de guidage s'étend parallèlement à l'axe médian (M) et de manière espacée de celui-ci, de telle sorte que l'élément étrier (4) bute contre la surface de guidage (120) lors d'un actionnement de l'élément vis (2).

5. Boulon basculant (1) selon la revendication 4, **caractérisé en ce que** l'élément de guidage (108) produisant le guidage de la position de montage à la position de fixation comprend une surface de guidage (133) disposée sur la section à nervure (127) et une languette (134) disposée sur l'élément étrier (4), la languette (134) venant en contact avec la surface de guidage (133) lors d'un déplacement hors de la position de montage, et la surface de guidage (133) et la languette (134) étant réalisées de telle sorte que, lors d'un déplacement de l'élément étrier (4) hors de la position de montage, l'élément étrier (4) peut pivoter dans la position de fixation

6. Boulon basculant selon la revendication 5, **caractérisé en ce que** le déplacement de l'élément étrier (4) de la position de montage à la position de fixation est produit exclusivement par la surface de guidage (133) et la languette (134).

7. Boulon basculant (1) selon la revendication 5 ou 6, **caractérisé en ce que** la surface de guidage (120) est disposée sur la section à nervure (127) du côté de son extrémité, en particulier sur le côté frontal (135) ; et/ou **en ce que** la surface de guidage (120) est réalisée de manière courbe autour d'un axe de courbure (K) s'étendant transversalement à l'axe médian (M).

8. Boulon basculant (1) selon l'une des revendications 4 à 7, **caractérisé en ce que** la section à nervure (127) comprend une surface de butée (136), l'élément étrier (4) s'appuyant contre la surface de butée (136) lors du déplacement de la position de fixation à la position de montage et étant pivoté dans la position de montage lors d'un déplacement supplémentaire, de telle sorte que l'élément étrier (4) soit pivoté de sorte que l'axe principal (H) de l'élément étrier (4) vienne se situer sensiblement parallèlement à l'axe médian.

9. Boulon basculant (1) selon l'une des revendications précédentes, **caractérisé en ce que** l'élément vis (2) comprend au niveau de la pointe de vis (137) une rainure (138) s'étendant autour de l'axe médian (M), rainure à l'aide de laquelle l'élément vis (2) est en prise avec un point de support (139) sur la section à nervure (127).

10. Boulon basculant (1) selon l'une des revendications précédentes, **caractérisé en ce que**
l'élément vis (2) comprend une section de réception (129), la section de réception (29) produisant un point de support (121) pour un élément de recouvrement de WC, tel qu'une lunette de WC ou un abattant de WC ; et/ou en ce que l'élément vis (2) comprend une tête de vis (122) à partir de laquelle le filetage extérieur (3) s'écarte, une rondelle (123) étant disposée dans la région de la tête de vis ; et/ou
**en ce que** l'élément vis (2) comprend, du côté extérieur, une partie de butée (132) destinée à venir en butée directement ou indirectement contre une région de paroi (25, 26).

11. Boulon basculant (1) selon l'une des revendications précédentes, **caractérisé en ce que** l'élément vis (2) comprend une tête de vis (22), à partir de laquelle le filetage extérieur (3) s'écarte, une rondelle (23) étant disposée dans la région de la tête de vis.
